# EUROPEAN PATENT SPECIFICATION

(11) **EP 2 507 120 B1**
(45) Date of publication and mention of the grant of the patent: **23.05.2018**
(21) Application number: 10807351.1
(22) Date of filing: 26.11.2010
(51) Int. Cl.: B62J 25/00, B62J 27/00

(54) **TWO-WHEELED MOTORIZED VEHICLE**
MOTORISIERTES FAHRZEUG MIT ZWEI RÄDERN
VÉHICULE MOTORISÉ À DEUX ROUES

(30) Priority: 30.11.2009 IT MI20092104
(43) Date of publication of application: 10.10.2012
(73) Proprietor: Officine UBU S.r.l., 20159 Milano (MI) (IT)
(72) Inventor: ZULIANI, Franco, I- 20121 Milano (Ml) (IT)
(74) Representative: Perani & Partners S.p.A.
(86) International application number: PCT/IB2010/003027
(87) International publication number: WO 2011/064654

(56) References cited:
- JP-U- 56 014 792
- JP-U- 59 045 179
- JP-U- 60 018 885
- JP-U- 63 032 087
- US-B1- 7 287 773
- US-B1- 7 431 118

## Description

The present invention relates to a two-wheeled motorized vehicle as defined in the preamble of claim 1.

Preferably, the invention relates to a two-wheeled motorized vehicle of the type having a so-called "step-through" frame. These frames are characterized in that they can be stepped through at the bodywork portion between the front body and the rear body to define an area in which the legs of one or two users of the vehicle may be received.

Two-wheeled vehicles as described above are commonly known in the art as "scooters" and have a "step-through" frame mounted to a front wheel and a rear wheel, wherein each wheel functionally cooperates with a corresponding suspension assembly connected to the frame. The frame comprises a front post, a rear post and a central post. A body is also mounted to the frame, defining a rear body part and a front body part.

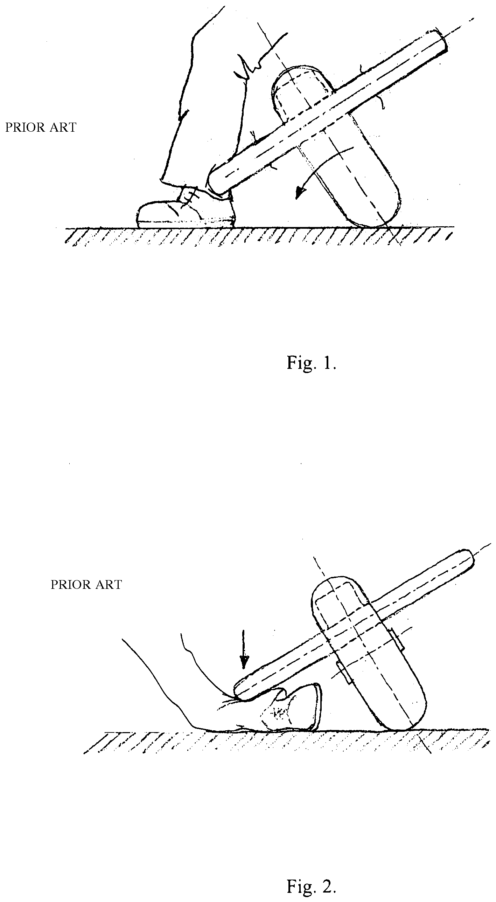

It shall be noted that almost all the above mentioned vehicles have a foot board horizontally extending between the rear body part and the front body part, for one or more users, which is supported at the central post. Examples of the above mentioned vehicles are given in documents JP56014792U, on which the preamble of independent claim 1 is based, JP60018885U and JP59045179U. Statistical studies have shown that most non-fatal accidents on two-wheeled vehicles cause serious injury to users' legs. Particularly, the user is often injured by the vehicle he/she is driving. In these cases, as the user falls, he/she gets trapped between one side of the vehicle bodywork and the surface upon which the vehicle is running. More often, the lower part of the leg gets trapped between the foot board and the surface. As shown in Figures 1 and 2, in most accidents this condition results in fractures of the tibia and/or fibula of the user's leg, involving slow and painful recovery.

In other cases, it may happen that a driver of a non-moving vehicle has at least one leg resting on the ground and is laterally hit by another vehicle, e.g. a car. In this
condition, the leg of the user may get trapped between the foot board and the car bumper and become seriously injured.

Due to the above, the need arises for a two-wheeled motorized vehicle that can protect users' health by minimizing leg injuries of users as they fall or have an accident.

Therefore, the object of the present invention is to provide a two-wheeled motorized vehicle that has such structural and functional features as to fulfill the above needs, while obviating the drawbacks of prior art.

This object is fulfilled by a two-wheeled motorized vehicle as defined in claim 1.

Further characteristics and advantages of the two-wheeled motorized vehicle of the present invention will be apparent from the following description of preferred embodiments thereof, which is given by way of illustration and without limitation with reference to the accompanying figures, in which:
- Figure 1 shows a front view of a two-wheeled motorized vehicle of the prior art, with the foot board of the vehicle hitting against the lower part of the leg of a user in an illustrative example of a condition immediately preceding the fall of a user;
- Figure 2 shows a front view of a two-wheeled motorized vehicle of the prior art, with the lower part of the leg of a user trapped between the foot board and the road surface in an illustrative example of a user's fall;
- Figure 3 shows a perspective view of a preferred embodiment of the two-wheeled motorized vehicle of the invention;
- Figure 4 shows a front view of the embodiment of Figure 3, with the lower leg of the leg of a user protected by the movement of one of the bearing portions of the foot board, to preserve the integrity of the limb;
- Figure 5 shows a sectional perspective view of the foot board of Figure 3;
- Figure 6 is a further view of the foot board of Figure 5;
- Figure 7 shows a perspective sectional view of a second embodiment of the two-wheeled motorized vehicle of the invention;
- Figure 8 shows a top view of the foot board of Figure 7;
- Figures 9 and 10 show sectional side views of a third embodiment of a two-wheeled motorized vehicle which does not belong to the invention;
- Figure 11 is a sectional perspective view of a side end of the foot board of the two-wheeled motorized vehicle of the invention;
- Figure 12 is a sectional view of the guide means for the bearing portion of the foot board of the two-wheeled motorized vehicle of the invention.

Referring to the annexed figures, numeral 1 generally designates a two-wheeled motorized vehicle of the present invention.

The vehicle 1 preferably has a "step-through" frame mounted to a rear wheel and a front wheel of the vehicle 1 and comprises a rear post, a front post and a central post 12. The central post 12 has a longitudinal extension and acts as a connection between the rear post and the front post.

As used herein, the term "step-through" designates a frame in which the rear post and the front post extend from each of the ends of the central post 12, in approximately oblique directions, for the frame to have a substantially concave extension with its concavity facing downwards. In practice, "step-through" frame configurations define an area for receiving users' legs substantially at the central post.

The frame functionally cooperates with each wheel of the vehicle 1 through a corresponding suspension assembly, which is connected to the frame and the wheels.

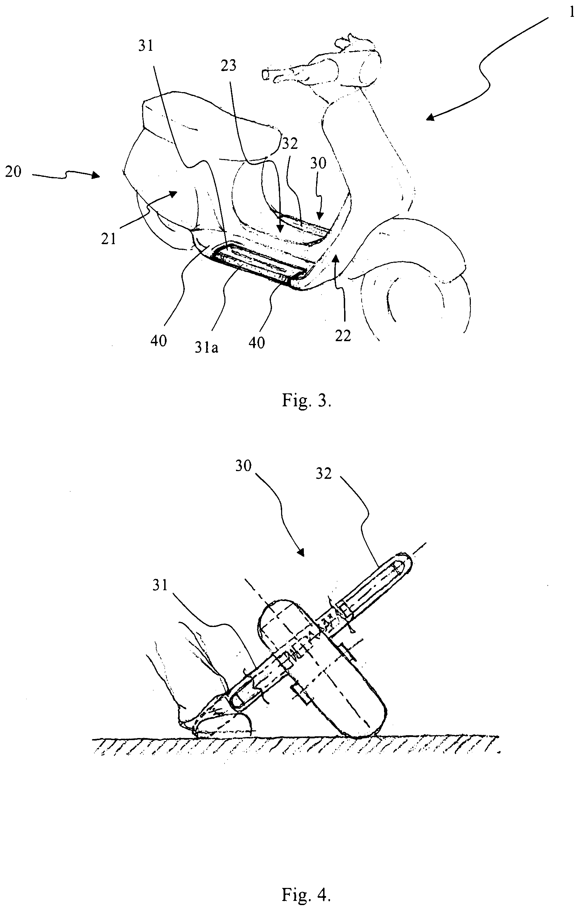

As shown in the example of Figure 3, the vehicle 1 comprises a bodywork 20 which is mounted to the frame and includes a rear body 21, a front body 22 and a central body 23 that connects the rear body 21 and the front body 22.

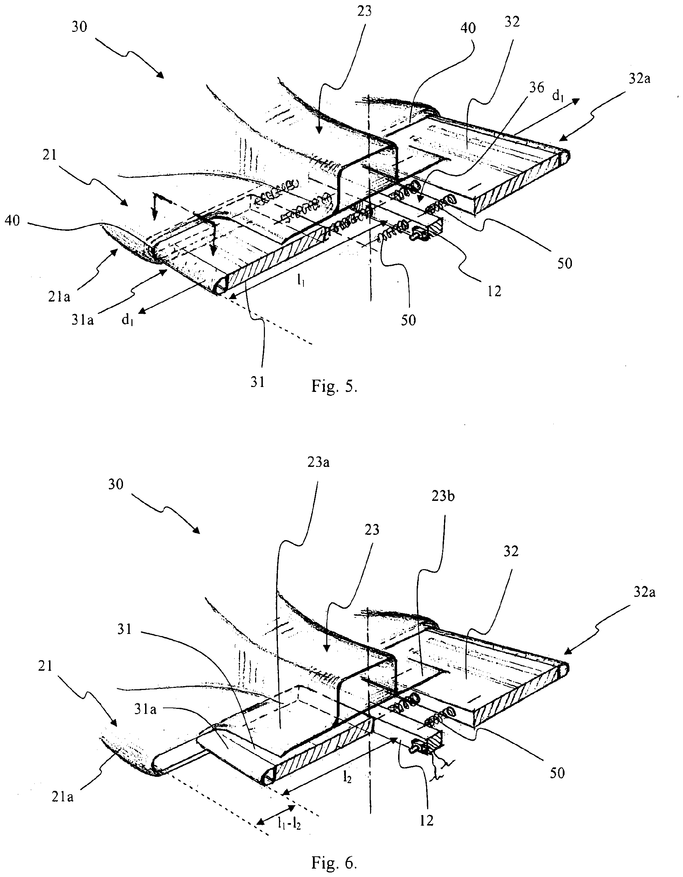

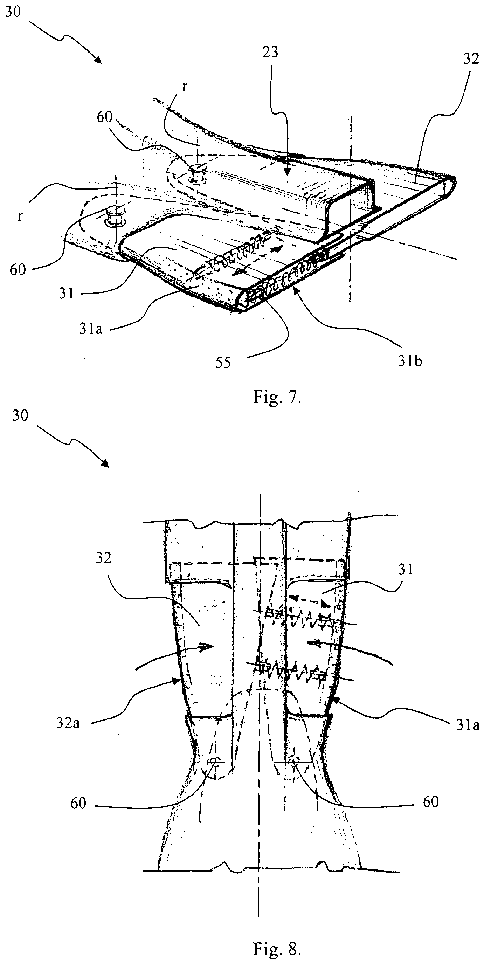

In a preferred embodiment, as shown in the embodiments of Figures 5 and 6, the vehicle 1 comprises a foot board 30 for the user, which is supported by the central post 12. Nevertheless, it shall be noted that, in alternative embodiments, the foot board 30 may be directly supported by the bodywork 20, as shown in the examples of Figures 7 and 8.

The foot board 30 comprises a first bearing portion 31 and a second bearing portion 32. Each bearing portion 31, 32 extends substantially over a plane that extends in a direction d₁ perpendicular to the direction of extension of the post 12. Preferably, the direction of extension of the post 12 lies on the plane of plane of extension of the bearing portion 31, 32.

As shown in the example of Figure 3, each bearing portion 31, 32 has a free end 31a, 32a, extending substantially parallel to the direction of extension of the central post 12. It shall be noted that the term free end 31a, 32a may be intended to designate the edge of the bearing portion 31, 32.

Advantageously, each bearing portion 31, 32 is reversibly movable relative to the central post 12 between a rest position and an operating position. Particularly, in the rest position, the free end 31a, 32a of each bearing portion 31, 32 is at a distance from the central post 12 that is greater than the distance of the free end 31a, 32a of each bearing portion 31, 32 in the operating position.

In view of the above, if the vehicle 1 tilts on a surface on which it is driven (e.g. a road) the contact points of the vehicle 1 on the road surface are defined by the outermost (and/or projecting) points of one of the two sides of the bodywork 20. Particularly, the outermost laterally projecting points of the bodywork 20 define a bearing surface identified by the envelope of the outermost projecting points. In one embodiment of the bodywork, the outermost projecting points may be located at the handlebar, the foot board 30 and/or the rear body 21.

In the above configuration, as described above, in which each bearing portion 31, 32 of the foot board 30 is reversibly movable relative to the central post 12 between the rest position and the operating position, the user's leg may be prevented from being non-violently hit by the free end 31a, 32a of each bearing portion 31, 32, which will protect the user's limb.

The foot board 30 may advantageously find application in any type of two-wheeled motorized vehicle, such as a motorcycle, a bicycle, etc. Furthermore, the foot board is useful in protecting the legs of the driver and/or passenger. When reference is made herein to a user, the foot board 30 will be also related to any passenger carried.

As shown in the accompanying figures, the vehicle 1 comprises guide means 40 for each bearing portion 31, 32 sliding in the direction d₁.

Particularly referring to the example of Figure 6, the guide means 40 define at least one opening at the front 22 and/or rear 21 bodies of the bodywork 20. Namely, the front 22 and rear 21 bodies of the bodywork 20 comprise respective housings for the bearing portions 31, 32 of the foot board 30.

In a preferred embodiment, each bearing portion 31, 32 is reversibly movable in the direction d₁. As shown in Figure 5, the direction d₁ is substantially perpendicular to the direction of extension of the post 12.

As shown in the example of Figures 5 and 6, each bearing portion 31, 32 defines a corresponding retractable portion of the foot board 30.

The presence of the retractable portions 31, 32, reversibly movable relative to the central post 12 between the rest position and the operating position prevents the lower limb from getting trapped between the foot board 30 and the road surface, and from being exposed to violent impacts.

As shown in the example of Figure 5, in the rest position, the end portion 31a of the foot board 30 is located at a distance from the central post 12 that is substantially equal to the distance between the side of the bodywork 20 and the central post 12. Particularly, in the rest position, the end portion 31a of the foot board 30 is located at a distance from the central post 12 that is substantially equal to the distance between the end portion 21a of the rear body 21 and one side of the central post 12.

As is apparent from the example of Figure 5, in the rest position the end portion 31a of the foot board 30 is at a distance l₁ from the central post.

As is apparent from the example of Figure 6, in the operating position the end portion 31a of the foot board 30 is at a distance l₂ from the central post.

Particularly referring to the operating position, the bearing portion 31 is located within a distance l₁-l₂ equal to the difference between the distance l₁ and the distance l₂. As a result, a space is created between the end portion 31a and the extension of the end portion 21a of the rear body 21 (as delimited by the broken lines of Figure 6), which can receive the user's limb, and thus protect the limb even in case of fall.

In a preferred embodiment of the invention, the vehicle 1 comprises actuator means 50 attached to the bearing portion 31, 32 and the central post 12. Advantageously, the actuator means 50 are adapted to move the bearing portion 31, 32 from the operating position back to the rest position.

Preferably, the actuator means 50 include elastic means such as elastic members and/or springs.

The bearing portions 31, 32 of the foot board 30 extend on each side of the central post 12.

As shown in the examples of Figures 5 and 6, a gap 36 is formed between the central post 12 and each bearing portion 31, 32. The gap 36 is adapted to receive the actuator means 50. It shall be noted that, in the operating position, the gap 36 is occupied by the bearing portions 31, 32.

Advantageously, in the rest position, the bearing portion 31, 32 may jut out of the central body 23.

Each bearing portion 31, 32 of the foot board 30 may jut out of the central body 23 by 40% to 80% of its width.

In one embodiment, as shown in the example of Figure 6, the central body 23 comprises two opposed parts 23a, 23b, extending the central body 23.

In a further embodiment of the invention, each bearing portion 31, 32 extends at least partially from each side of the central body 23 or of the opposed parts 23a, 23b.

As shown in the examples of Figures 7 and 8, the bearing portion 31 is adapted to at least partially accommodate the opposed bearing portion 32.

In one embodiment, the central post 12 may be located above or below the foot board 30.

As shown in the examples of Figures 7 and 8, the bearing portion 31 substantially has a C section, which is adapted to define a housing 31b therein. Advantageously, the housing 31b acts as a guide for the sliding motion of the bearing portion 32 relative to the bearing portion 31.

In one embodiment, the bearing portion 31 has actuator means 55 attached to the opposed bearing portion 32. Particularly, the actuator means 55 are retained in the housing 31b of the bearing portion 31 to move each bearing portion 31, 32 from the operating position back to the rest position.

Referring to the example of Figures 7 and 8, each bearing portion is hinged by hinge means 60 whose axis is substantially perpendicular to the foot board 30.

Advantageously, the hinge means 60 allow rotation of the each bearing portion 31, 32 about an axis of rotation r substantially perpendicular to the horizontal direction of extension of said foot board 30. This will allow reversible motion of each bearing portion 31, 32 between the rest position and the operating position, as well as the creation of a space for receiving a lower portion of a user's limb. Thus, even in case of a side impact by a car, the user's leg can be protected. If a user (and/or a passenger, if any) has a foot resting on the ground and is laterally hit by a car, the foot board prevents the hit leg from being seriously injured. The hit leg provides thrust and hence allows the bearing portion 31, 32 to move toward the central post, while preventing the user's leg from being caught between the edge of the bearing portion 31, 32 and the car.

It shall be noted that the bodywork of the vehicle also acts to protect the user's leg when the latter, during the lateral impact by the car, is free to move further inwards toward the central post 12 of the vehicle, while allowing the car to contact the bodywork 20, particularly the front body 22 and/or the rear body 21.

Preferably, the vehicle 1 comprises engine means (not shown) for transferring motion to at least one of the wheels.

In one embodiment, the vehicle 1 further comprises detection means (not shown) for determining the tilt of the vehicle 1 relative to the surface upon which it runs, which are adapted to generate a tilt signal as soon as a predetermined tilt relative to such surface is exceeded. Preferably, the detection means include a tilt sensor or appropriate devices for determining the tilt of the vehicle 1.

In one embodiment, the vehicle 1 comprises processing means in signal communication with the detection means and adapted to receive the tilt signal. Particularly, the processing means are associated with the engine and are adapted to turn off the engine as a function of the tilt signal that has been received.

Therefore, if a user falls and the vehicle 1 consequently tips over, the wheel designed to transfer motion to the vehicle may be prevented from turning, and causing further injury to the user. The tilt signal may be also handled by the processing means to turn off any electric device on the vehicle, and thus prevent any fire caused by leaking fuel in contact with such electric devices.

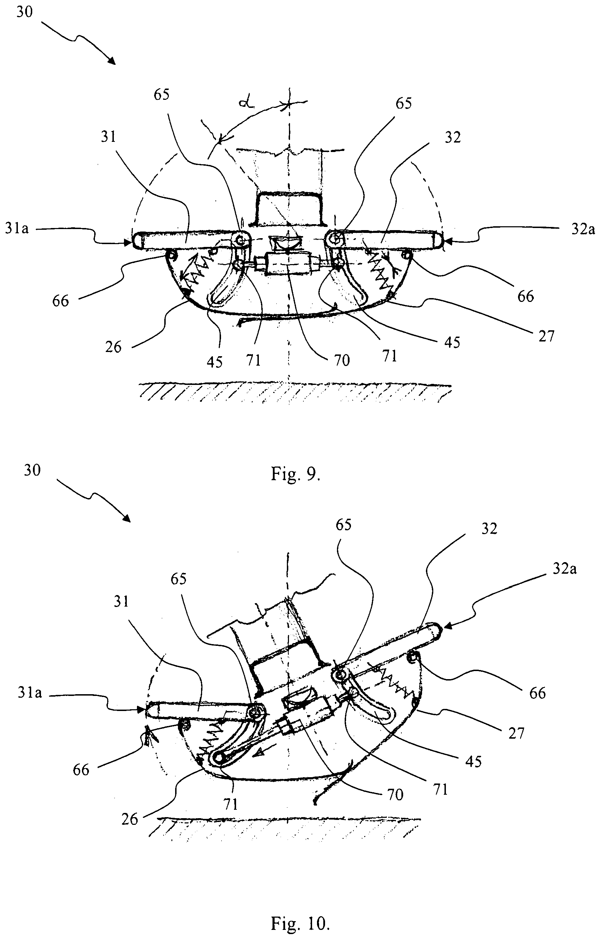

In a third embodiment, as shown in the examples of Figures 9 and 10, the vehicle 1 comprises actuator means 70 in signal communication with the processing means. The actuator means 70 are attached to the central post 12 and to each of the bearing portions 31, 32 of the foot board 30.

The actuator means 70 comprise a dual piston-cylinder assembly in which each piston ends with a corresponding pin 71.

The vehicle 1 comprises guide means 45 for guiding the sliding motion of each pin 71 in a transverse direction substantially parallel to the direction of extension of the bearing portions 31, 32 to the rest position.

The guide means 45 define a curved housing. The inner end portions of the bearing portions 31, 32 are attached by special first hinge assemblies 65, to one end of the guide means 45.

The bodywork 20 of the vehicle 1 also comprises bodywork portions 26, 27 in mutual sliding relation, each attached to the bearing portions 31, 32 by second hinge assemblies 66.

It shall be noted that, according to the tilt signal generated by the detection means, the processing means control the extension of the piston of the actuator means 70 thereby allowing upward rotation of the bearing portion 31, 32. Due to the fixed attachment provided by the first hinge assembly 65, the extension of the piston causes a rotary motion of the bearing portion 31, 32 and, as a result, a sliding motion of the bodywork portions 26, 27, which are also attached to the bearing portions 31, 32. Thus, in case of fall, an alternative embodiment may be provided, in which the bearing portions 31, 32 of the foot board 30 are moved and rotated upwards thereby preventing the user's leg from being hit by the foot board 30 or causing a non-violent impact thereupon.

In one embodiment, the free end 31a, 32a of the bearing portion 31, 32 is made of a soft and/or elastic material, so that it can damp any impacts against the user's leg.

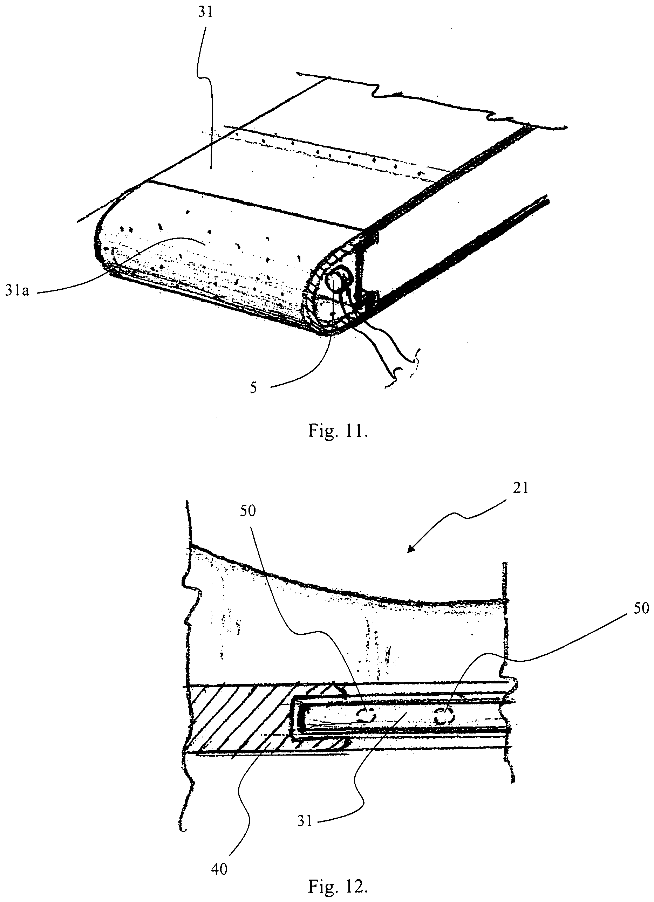

In one embodiment, as shown in the example of Figure 11, the bearing portion 31, 32 comprises at least one detection device 5 which is adapted to generate an electric detection signal in response to a pressure action. The detection device 5 is in signal communication with the processing means. In one embodiment, multiple detection devices 5 may be arranged along the free end 31a, 32a of the bearing portion 31, 32.

Particularly, since the free end 31a, 32a of the bearing portion 31, 32 is made of an elastic material, in case of fall or lateral impact, the detection device 5 is actuated by the pressure generated by the bearing portion 31, 32 against the surface upon which the vehicle runs or against the user's leg. Thus, the engine may be turned off in response to the electric signal generated by the detection device 5.

As clearly shown in the above description, the two-wheeled motorized vehicle of the present invention fulfills the needs and obviates prior art drawbacks as set out in the introduction of this disclosure.

Those skilled in the art will obviously appreciate that a number of changes and variants may be made to the two-wheeled motorized vehicle of the invention as described hereinbefore to meet specific needs, without departure from the scope of the invention, as defined in the following claims.

For example, each bearing portion 31, 32 may be arranged to reversibly move from the rest position to the operating position in an independent manner.

Also, according to the present invention, the actuator means 50 may allow automated motion of the bearing portions 31, 32 between the rest position and the operating position, thereby preventing the user's leg from being hit by the free end 31a, 32a of each bearing portion 31,32 of the foot board 30 during a fall or accident. The actuator means 50 may include, for instance, hydraulic, oil hydraulic, pneumatic pistons, or motorized mechanical members.

In order to obtain an automated motion, the processing means are in signal communication with the detection device 5 and are adapted to generate a control signal to trigger the actuator means 50 in response to the electric signal generated by one or more detection devices 5. Thus, each bearing portion 31, 32 is reversibly movable relative to the central post 12 between a rest position and an operating position in an automated manner. Preferably, the processing means generate the control signal for the actuator means 50 in response to the electric detection signal they have received, only when the vehicle is moving.

In one embodiment, the bearing portions 31, 32 may be moved between the rest position and the operating position in response to both the tilt signal generated by the tilt means and the signal generated by the detection device 5.

## Claims

1. A two-wheeled motorized vehicle (1) comprising:
- a frame mounted to a front wheel and a rear wheel of said vehicle (1), said frame comprising at least one central post (12),
- a bodywork (20) mounted to said frame, which has a rear body (21), a front body (22) and a central body (23) for connecting together said rear body (21) and said front body (22),
- a foot board (30) for at least one user, supported by said central post (12), said foot board (30) extending substantially horizontally with respect to said central post (12), wherein said foot board (30) comprises a first bearing portion (31) and a second bearing portion (32) extending transverse to said central post (12) and each having a respective free lateral end (31a, 32a) extending substantially parallel to the direction of extension of the central post (12), the front and the rear bodies (22, 21) of the bodywork (20) comprises respective housings for the bearing portions (31, 32) of the foot board (30) and wherein each bearing portion (31, 32) is reversibly movable relative to said central post (12) between a rest position and an operating position, whereby in the rest position the free lateral end (31a, 32a) of each bearing portion (31, 32) is located at a distance from the central post (12) that is substantially equal to the distance between a lateral end portion (21a) of the portion of the rear body (21) in which the housing for the respective bearing portion (31, 32) is provided and the central post (12), **characterized in that** the distance from the central post (12) at which in the rest position the free lateral end (31a, 32a) of each bearing portion (31, 32) is located is greater than the distance reached by the free lateral end (31a, 32a) of each bearing portion (31, 32) in the operating position, so that in the operating position a space suitable for receiving a user's limb is created between the respective free lateral end (31a, 32a) and the extension of the respective lateral end portion (21a) of the
portion of the rear body (21) in which the housing for the respective bearing portion (31, 32) is provided.

2. A two-wheeled motorized vehicle (1) as claimed in claim 1, wherein each bearing portion (31, 32) substantially lies on a plane extending in a direction (d₁) perpendicular to the direction of extension of said central post (12), said vehicle (1) comprising guide means (40) for allowing each bearing portion (31, 32) to slide in said direction (d₁), and wherein each bearing portion (31, 32) defines a corresponding retractable portion of said foot board (30).

3. A two-wheeled motorized vehicle (1) as claimed in claim 1 or 2, comprising actuator means (50) fixed to each bearing portion (31, 32) and to the central post (12), said actuator means (50) being adapted to move the respective bearing portion (31, 32) from said operating position back to said rest position, and wherein each bearing portion (31, 32) extends from each side of said central post (12).

4. A two-wheeled motorized vehicle (1) as claimed in claim 3, wherein a gap (36) of predetermined length is provided between said central post (12) and each bearing portion (31, 32), said actuator means (50) being placed substantially at said gap (36).

5. A two-wheeled motorized vehicle (1) as claimed in any claim from 1 to 4, wherein, in said rest position, each bearing portion (31, 32) may jut out of said central body (23) by 40% to 80% of the width of each bearing portion.

6. A two-wheeled motorized vehicle (1) as claimed in claim 1, wherein each bearing portion (31, 32) at least partially extends from each side of said central post (12), said first bearing portion (31) being adapted to partially accommodate said second bearing portion (32).

7. A two-wheeled motorized vehicle (1) as claimed in claim 6, wherein said first bearing portion (31) has a substantially C-shaped profile defining a housing (31b) therein, said C-shaped housing (31b) acting as a sliding guide for said second bearing portion (32) relative to said first bearing portion (31).

8. A two-wheeled motorized vehicle (1) as claimed in claim 7, wherein said first bearing portion (31) comprises actuator means (55) fixed to said second bearing portion (32), said actuator means (55) being anchored within said C-shaped housing (31b) and fixed to said first and second bearing portions (31, 32) respectively, to move each bearing portion (31, 32) from said operating position back into said rest position.

9. A two-wheeled motorized vehicle (1) as claimed in claim 7 or 8, wherein each bearing portion (31, 32) is hinged by hinge means (60) substantially perpendicular to said foot board (30), said hinge means (60) allowing each bearing portion (31, 32) to rotate about an axis of rotation (r) substantially perpendicular to a direction (d₁) perpendicular to the direction of extension of said central post (12).

10. A two-wheeled motorized vehicle (1) as claimed in any claim from 1 to 9, comprising:
- engine means for transferring motion to at least one of said wheels,
- detection means for determining the tilt of said vehicle (1) relative to the ground,
and for generating an off signal as soon as a predetermined tilt relative to said ground is exceeded,
- processing means in signal communication with said detection means, for receiving said off signal, said processing means being associated with said engine means for turning off said engine means in response to said received off signal.

11. A two-wheeled motorized vehicle (1) as claimed in claim 3 , wherein each bearing portion (31, 32) comprises at least one detection device (5) for generating an electric detection signal when subjected to a pressure action, said vehicle (1) comprising processing means in signal communication with said at least one detection device (5) and adapted to generate a control signal for actuating said actuator means (50) in response to said generated electric detection signal, for each bearing portion (31, 32) to be reversibly movable relative to said central post (12) between said rest position and said operating position.

12. A two-wheeled motorized vehicle (1) as claimed in claim 3 , wherein said actuator means (50) comprise elastic means.

## Patentansprüche

1. Motorisiertes Zweirad (1), umfassend:
- einen Rahmen, der an einem Vorderrad und einem Hinterrad des Motorrads (1) montiert ist, wobei der Rahmen wenigstens eine Mittelstütze (12) umfasst,
- eine Karosserie (20), die an dem Rahmen montiert ist, welche einen hinteren Körper (21), einen vorderen Körper (22) und einen mittleren Körper (23) umfasst, um den hinteren Körper (21) und den vorderen Körper (22) miteinander zu verbinden,
- ein Trittbrett (30) für wenigstens einen Benutzer, das von der Mittelstütze (12) getragen wird, wobei das Trittbrett (30) sich im Wesentlichen horizontal in Bezug auf die Mittelstütze (12) erstreckt,
wobei das Trittbrett (30) einen ersten Tragabschnitt (31) und einen zweiten Tragabschnitt (32) umfasst, die sich quer zu der Mittelstütze (12) erstrecken und jeweils ein freies seitliches Ende (31a, 32a) aufweisen, das sich im Wesentlichen parallel zu der Erstreckungsrichtung der Mittelstütze (12) erstreckt, der vordere und der hintere Körper (22, 21) der Karosserie (20) jeweils Gehäuse für die Tragabschnitte (31, 32) des Trittbretts (30) umfassen und wobei jeder Tragabschnitt (31, 32) relativ zu der Mittelstütze (12) zwischen einer Ruhestellung und einer Arbeitsstellung reversibel beweglich ist, wobei in der Ruhestellung das freie seitliche Ende (31a, 32a) eines jeden Tragabschnitts (31, 32) in einem Abstand von der Mittelstütze (12) angeordnet ist, der im Wesentlichen gleich dem Abstand zwischen einem seitlichen Endabschnitt (21a) des Abschnitts des hinteren Körpers (21) ist, in dem das Gehäuse für den jeweiligen Tragabschnitt (31, 32) vorgesehen ist, und der Mittelstütze (12), **dadurch gekennzeichnet, dass** der Abstand von der Mittelstütze (12), an der das freie seitliche Ende (31a, 32a) eines jeden Tragabschnitts (31, 32) in der Ruhestellung angeordnet ist, größer ist als der Abstand, den das freie seitliche Ende (31a, 32a) eines jeden Tragabschnitts (31, 32) in der Arbeitsstellung erreicht, so dass in der Arbeitsstellung ein zur Aufnahme des Beines eines Benutzers geeigneter Raum zwischen dem jeweiligen freien seitlichen Ende (31a, 32a) und der Erstreckung des jeweiligen seitlichen Endabschnitts (21a) des Abschnitts des hinteren Körpers (21) entsteht, in dem das Gehäuse für den jeweiligen Tragabschnitt (31, 32) vorgesehen ist.

2. Motorisiertes Zweirad (1) nach Anspruch 1, wobei jeder Tragabschnitt (31, 32) im Wesentlichen auf einer Ebene liegt, die sich in einer senkrecht zur Erstreckungsrichtung der Mittelstütze (12) erstreckenden Richtung (d₁) erstreckt, wobei das Motorrad (1) Führungsmittel (40) umfasst, um es jedem Tragabschnitt (31, 32) zu erlauben, in die Richtung (d₁) zu gleiten und wobei jeder Tragabschnitt (31, 32) einen entsprechenden rückziehbaren Abschnitt des Trittbretts (30) definiert.

3. Motorisiertes Zweirad (1) nach Anspruch 1 oder 2, umfassend Betätigungsmittel (50), die an jedem Tragabschnitt (31, 32) und an der Mittelstütze (12) befestigt sind, wobei die Betätigungsmittel (50) dazu geeignet sind, den jeweiligen Tragabschnitt (31, 32) von der Arbeitsstellung zurück in die Ruhestellung zu bewegen und wobei jeder Tragabschnitt (31, 32) sich von jeder Seite der Mittelstütze (12) erstreckt.

4. Motorisiertes Zweirad (1) nach Anspruch 3, wobei ein Hohlraum (36) vorgegebener Länge zwischen der Mittelstütze (12) und jedem Tragabschnitt (31, 32) vorgesehen ist, wobei die Betätigungsmittel (50) im Wesentlichen in dem Hohlraum (36) angeordnet sind.

5. Motorisiertes Zweirad (1) nach einem der Ansprüche von 1 bis 4, wobei in der Ruhestellung jeder Tragabschnitt (31, 32) um 40% bis 80% der Breite eines jeden Tragabschnitts aus dem mittleren Körper (23) auskragen kann.

6. Motorisiertes Zweirad (1) nach Anspruch 1, wobei jeder Tragabschnitt (31, 32) sich wenigstens teilweise aus jeder Seite der Mittelstütze (12) erstreckt, wobei der erste Tragabschnitt (31) dazu geeignet ist, den zweiten Tragabschnitt (32) teilweise aufzunehmen.

7. Motorisiertes Zweirad (1) nach Anspruch 6, wobei der erste Tragabschnitt (31) ein im Wesentlichen C-förmiges Profil aufweist, das ein Gehäuse (31b) darin definiert, wobei das C-förmige Gehäuse (31b) als Gleitführung für den zweiten Tragabschnitt (32) relativ zu dem ersten Tragabschnitt (31) fungiert.

8. Motorisiertes Zweirad (1) nach Anspruch 7, wobei der erste Tragabschnitt (31) Betätigungsmittel (55) umfasst, die an dem zweiten Tragabschnitt (32) befestigt sind, wobei die Betätigungsmittel (55) im Inneren des C-förmigen Gehäuses (31b) verankert und jeweils an dem ersten und zweiten Tragabschnitt (31, 32) befestigt sind, um jeden Tragabschnitt (31, 32) von der Arbeitsstellung zurück in die Ruhestellung zu bewegen.

9. Motorisiertes Zweirad (1) nach Anspruch 7 oder 8, wobei jeder Tragabschnitt (31, 32) durch Scharniermittel (60) im Wesentlichen senkrecht zu dem Trittbrett (30) angelenkt ist, wobei die Scharniermittel (60) es einem jeden Tragabschnitt (31, 32) erlauben, sich um eine Rotationsachse (r) zu drehen, die im Wesentlichen senkrecht zu einer Richtung (d₁) verläuft, die senkrecht zu der Erstreckungsrichtung der Mittelstütze (12) verläuft.

10. Motorisiertes Zweirad (1) nach einem der Ansprüche 1 bis 9, umfassend:
- Motormittel zum Übertragen der Bewegung auf wenigstens eines der Räder,
- Erfassungsmittel zum Erfassen der Neigung des Motorrads (1) relativ zum Boden,
und zum Erzeugen eines Abschaltsignals, sobald eine vorgegebene Neigung relativ zum Boden überschritten wird,
- Verarbeitungsmittel in Signalverbindung mit den Erfassungsmitteln zum Empfangen des Abschaltsignals, wobei die Verarbeitungsmittel mit den Motormitteln verbunden sind, um die Motormittel in Reaktion auf das empfangene Abschaltsignal auszuschalten.

11. Motorisiertes Zweirad (1) nach Anspruch 3, wobei jeder Tragabschnitt (31, 32) wenigstens eine Erfassungseinrichtung (5) zum Erzeugen eines elektrischen Erfassungssignals umfasst, wenn es einer Druckwirkung ausgesetzt ist, wobei das Motorrad (1) Verarbeitungsmittel umfasst, die in Signalverbindung mit der wenigstens einen Erfassungseinrichtung (5) stehen und dazu geeignet sind, ein Steuersignal zum Betätigen der Betätigungsmittel (50) in Reaktion auf das erzeugte elektrische Erfassungssignal zu erzeugen, so dass jeder Tragabschnitt (31, 32) relativ zu der Mittelstütze (12) zwischen der Ruhestellung und der Arbeitsstellung reversibel verschiebbar ist.

12. Motorisiertes Zweirad (1) nach Anspruch 3, wobei die Betätigungsmittel (50) elastische Mittel umfassen.

## Revendications

1. Véhicule motorisé à deux roues (1) comprenant :
- un châssis monté sur une roue avant et une roue arrière dudit véhicule (1), ledit châssis comprenant au moins un montant central (12),
- une carrosserie (20) montée sur ledit châssis, qui comporte un corps arrière (21), un corps avant (22) et un corps central (23) pour connecter ensemble ledit corps arrière (21) et ledit corps avant (22),
- un repose-pieds (30) pour au moins un utilisateur, supporté par ledit montant central (12), ledit repose-pieds (30) s'étendant sensiblement horizontalement par rapport audit montant central (12),
dans lequel ledit repose-pieds (30) comprend une première partie d'appui (31) et une deuxième partie d'appui (32) s'étendant transversalement audit montant central (12) et ayant chacune une extrémité latérale libre respective (31a, 32a) s'étendant sensiblement parallèlement à la direction d'extension du montant central (12), les corps avant et arrière (22, 21) de la carrosserie (20) comprennent des logements respectifs pour les parties d'appui (31, 32) du repose-pieds (30) et dans lequel chaque partie d'appui (31, 32) est mobile de manière réversible par rapport audit montant central (12) entre une position de repos et une position de service, moyennant quoi, dans la position de repos, l'extrémité latérale libre (31a, 32a) de chaque partie d'appui (31, 32) est située à une distance du montant central (12) qui est sensiblement égale à la distance entre une portion d'extrémité latérale (21a) de la partie du corps arrière (21) dans laquelle le logement pour la partie d'appui respective (31, 32) est disposé et le montant central (12), **caractérisé en ce que** la distance par rapport au montant central (12) à laquelle, dans la position de repos, l'extrémité latérale libre (31a, 32a) de chaque partie d'appui (31, 32) est située est supérieure à la distance atteinte par l'extrémité latérale libre (31a, 32a) de chaque partie d'appui (31, 32) dans la position de service, de manière que, dans la position de service, un espace approprié pour recevoir un membre de l'utilisateur est créé entre l'extrémité latérale libre respective (31a, 32a) et l'extension de la portion d'extrémité latérale respective (21a) de la partie du corps arrière (21) dans laquelle le logement pour la partie d'appui respective (31, 32) est disposé.

2. Véhicule motorisé à deux roues (1) selon la revendication 1, dans lequel chaque partie d'appui (31, 32) se trouve sensiblement dans un plan s'étendant dans une direction (d₁) perpendiculaire à la direction d'extension dudit montant central (12), ledit véhicule (1) comprenant des moyens de guide (40) pour permettre à chaque partie d'appui (31, 32) de coulisser dans ladite direction (d₁), et dans lequel chaque partie d'appui (31, 32) définit une portion rétractable correspondante dudit repose-pieds (30).

3. Véhicule motorisé à deux roues (1) selon la revendication 1 ou 2, comprenant des moyens d'actionnement (50) fixés à chaque partie d'appui (31, 32) et au montant central (12), lesdits moyens d'actionnement (50) étant adaptés pour ramener la partie d'appui respective (31, 32) de ladite position de service dans ladite position de repos, et dans lequel chaque partie d'appui (31, 32) s'étend à partir de chaque côté dudit montant central (12).

4. Véhicule motorisé à deux roues (1) selon la revendication 3, dans lequel un espace (36) de longueur prédéterminée est présent entre ledit montant central (12) et chaque partie d'appui (31, 32), lesdits moyens d'actionnement (50) étant placés sensiblement au niveau dudit espace (36).

5. Véhicule motorisé à deux roues (1) selon l'une quelconque des revendications 1 à 4, dans lequel, dans ladite position de repos, chaque partie d'appui (31, 32) peut faire saillie dudit corps central (23) de 40% à 80% de la largeur de chaque partie d'appui.

6. Véhicule motorisé à deux roues (1) selon la revendication 1, dans lequel chaque partie d'appui (31, 32) s'étend au moins en partie à partir de chaque côté dudit montant central (12), ladite première partie d'appui (31) étant adaptée pour recevoir en partie ladite deuxième partie d'appui (32).

7. Véhicule motorisé à deux roues (1) selon la revendication 6, dans lequel ladite première partie d'appui (31) a un profil sensiblement en forme de C définissant un logement (31b) dans celle-ci, ledit logement en forme de C (31b) agissant comme un guide de coulissement pour ladite deuxième partie d'appui (32) par rapport à ladite première partie d'appui (31).

8. Véhicule motorisé à deux roues (1) selon la revendication 7, dans lequel ladite première partie d'appui (31) comprend des moyens d'actionnement (55) fixée à ladite deuxième partie d'appui (32), lesdits moyens d'actionnement (55) étant ancrés dans ledit logement en forme de C (31b) et fixés respectivement auxdites première et deuxième parties d'appui (31, 32), pour ramener chaque partie d'appui (31, 32) de ladite position de service à ladite position de repos.

9. Véhicule motorisé à deux roues (1) selon la revendication 7 ou 8, dans lequel chaque partie d'appui (31, 32) est articulée par des moyens d'articulation (60) sensiblement perpendiculaires audit repose-pieds (30), lesdits moyens d'articulation (60) permettant à chaque partie d'appui (31, 32) de tourner autour d'un axe de rotation (r) sensiblement perpendiculaire à une direction (d) perpendiculaire à la direction d'extension dudit montant central (12).

10. Véhicule motorisé à deux roues (1) selon l'une quelconque des revendications 1 à 9, comprenant :
- des moyens de moteur pour transférer un mouvement à au moins une desdites roues,
- des moyens de détection pour déterminer l'inclinaison dudit véhicule (1) par rapport au sol et pour générer un signal d'arrêt dès qu'une inclinaison prédéterminée par rapport audit sol est dépassée,
- des moyens de traitement en communication de signal avec lesdits moyens de détection, pour recevoir ledit signal d'arrêt, lesdits moyens de traitement étant associés auxdits moyens de moteur pour désactiver lesdits moyens de moteur en réponse audit signal d'arrêt reçu.

11. Véhicule motorisé à deux roues (1) selon la revendication 3, dans lequel chaque partie d'appui (31, 32) comprend au moins un dispositif de détection (5) pour générer un signal de détection électrique quand il est soumis à un action de pression, ledit véhicule (1) comprenant des moyens de traitement en communication de signal avec ledit au moins un dispositif de détection (5) et adaptés pour générer un signal de commande pour actionner lesdits moyens d'actionnement (50) en réponse audit signal de détection électrique généré, pour chaque partie d'appui (31, 32) pour être mobile de manière réversible par rapport audit montant central (12) entre ladite position de repos et ladite position de service.

12. Véhicule motorisé à deux roues (1) selon la revendication 3, dans lequel lesdits moyens d'actionnement (50) comprennent des moyens élastiques.
